# EUROPÄISCHE PATENTSCHRIFT

(11) **EP 2 011 595 B1**
(45) Veröffentlichungstag und Bekanntmachung des Hinweises auf die Patenterteilung: **11.07.2018**
(21) Anmeldenummer: 08008860.2
(22) Anmeldetag: 13.05.2008
(51) Int. Cl.: B23F 19/05, B23F 23/12, B23Q 1/60

(54) **Werkzeugmaschine mit einer Schlittenanordnung**
machine tool with a slide device
machine-outil avec un agencement de chariot

(30) Priorität: 04.07.2007 DE 102007030956
(43) Veröffentlichungstag der Anmeldung: 07.01.2009
(73) Patentinhaber: THE GLEASON WORKS, Rochester, New York 14607-1282 (US)
(72) Erfinder: Mall, Johann, Dipl.-Ing., 82256 Fürstenfeldbruck (DE); Bönnemann, Ralf, Dipl.-Ing. (FH), 85764 Oberschleissheim (DE); Schäferling, Karl, Dipl.-Ing., 85716 Unterschleissheim (DE)
(74) Vertreter: Leinweber & Zimmermann

(56) Entgegenhaltungen:
- EP-A- 0 213 361
- DE-C1- 4 323 935
- DE-U1- 9 300 936

## Beschreibung

Die Erfindung bezieht sich auf eine Werkzeugmaschine mit einer Schlittenanordnung mit einem an einem Basisbereich gemäß einer in einer ersten Ebene liegenden ersten Bewegungsbahn bewegbar geführten ersten Schlitten und einem an dem ersten Schlitten gemäß einer in einer zweiten Ebene liegenden zweiten Bewegungsbahn bewegbar geführten zweiten Schlitten, durch deren Bewegungen ein Werkstück und ein Werkzeug gemäß einem vorgegebenen Bearbeitungsablauf relativ zueinander bewegt werden und ein einer in den zweiten Schlitten in einer Krafteinleitungsrichtung eingeleiteten Bearbeitungskraft entsprechender Kraftfluß durch den ersten Schlitten hindurch zu dem die Bearbeitungskraft aufnehmenden Basisbereich verläuft.

Bei einer mit einer derartigen Schlittenanordnung versehenen bekannten Werkzeugmaschine (DE 43 23 935 C1) stützt sich der erste Schlitten auf der Oberseite des von einem Bereich des Maschinengestells der Werkzeugmaschine gebildeten Basisbereichs derart ab, daß die erste Ebene horizontal und die darin liegende erste Bewegungsbahn geradlinig verläuft. Der zweite Schlitten ist an einer zu der ersten Bewegungsbahn orthogonalen Außenseite des ersten Schlittens derart geführt, daß die zweite Ebene und die darin liegende zweite Bewegungsbahn vertikal verlaufen. An einer dem ersten Schlitten abgewandten Außenseite des zweiten Schlittens ist in einem daran angeordneten Werkzeugkopf das eine Innenverzahnung aufweisende Werkzeug, bei dem es sich beispielsweise um ein Honrad handelt, drehend antreibbar gelagert. Außerdem ist dieser Werkzeugkopf gegenüber dem zweiten Schlitten um eine zur ersten Bewegungsbahn des ersten Schlittens parallele Achse winkelverstellbar. Das Werkstück, bei dem es sich beispielsweise um einen nachzubearbeitenden Zahnradrohling handelt, ist auf eine in einem Spindelstock drehbar gelagerte Werkstückspindel aufgespannt, wobei der Spindelstock und ein damit zusammenwirkender Reitstock längs einer zur ersten und zur zweiten Bewegungsbahn orthogonalen dritten Bewegungsbahn verstellbar ist. Die Bewegungen der beiden Schlitten und des Spindelstocks sind derart gesteuert, daß das Werkstück und das Werkzeug gemäß einem vorgegebenen Bearbeitungsablauf relativ zueinander bewegt werden. Bei dieser Anordnung wird die durch den Bearbeitungseingriff zwischen dem Werkzeug und dem Werkstück bedingte Bearbeitungskraft in den zweiten Schlitten eingeleitet, wodurch ein Kraftfluß durch den ersten Schlitten zu dem die Bearbeitungskraft aufnehmenden Basisbereich hin entsteht. Da der zweite Schlitten mit dem daran angeordneten Werkzeugkopf von der im wesentlichen vertikalen Außenseite des ersten Schlittens horizontal auskragt, verläuft dort der Kraftfluß im wesentlichen horizontal und wird beim Übergang in den ersten Schlitten zu einem im wesentlichen vertikalen Verlauf zum Basisbereich hin umgelenkt. Hierdurch wird die Steifigkeit der Anordnung herabgesetzt, so daß sie sich unter dem Einfluß der Bearbeitungskraft in unerwünschter Weise verformt.

Aus EP 0 213 361 A1 ist eine Schlittenanordnung mit den im Oberbegriff von Anspruch 1 angegebenen Merkmalen bekannt.

Der Erfindung liegt die Aufgabe zugrunde, eine Schlittenanordnung für eine Werkzeugmaschine der eingangs genannten Art zu schaffen, deren Steifigkeit bezüglich des Kraftflusses erhöht ist.

Erfindungsgemäß wird diese Aufgabe durch eine Werkzeugmaschine gemäß Anspruch 1 gelöst.

Dadurch verläuft der Kraftfluß in der erfindungsgemäßen Schlittenanordnung im wesentlichen parallel zur Krafteinleitungsrichtung und geradlinig sowie orthogonal zur horizontalen Führungsebene des zweiten Schlittens. Dies hat zur Folge, daß die Schlittenanordnung ähnlich einer in ihrer Längsrichtung kraftbeaufschlagten Säule eine hohe Steifigkeit gegen die Bearbeitungskraft aufweist und praktisch keine Biegemomente erfährt, die zu einer Verformung führen könnten.

Durch die Bewegung des ersten Schlittens längs der ersten Bewegungsbahn wird der erste Schlitten infolge der Neigung der ersten Ebene gleichzeitig parallel und auch orthogonal zur Krafteinleitungsrichtung verstellt. Der dieser Verstellbewegung folgende zweite Schlitten kann davon unabhängig längs der zweiten Bewegungsbahn orthogonal zur Krafteinleitungsrichtung verstellt werden. Da die Neigungsrichtung durch die Schnittlinie der ersten Ebene mit einer zur ersten und zweiten Ebene orthogonalen Ebene bestimmt ist, verläuft die zur Krafteinleitungsrichtung orthogonale Bewegungsbahnkomponente des ersten Schlittens parallel zur zweiten Bewegungsbahn des zweiten Schlittens, sofern letztere parallel zu der zur ersten und zweiten Ebene orthogonalen Ebene ausgerichtet wird. Dadurch kann die Verstellbewegung des zweiten Schlittens längs seiner zweiten Bewegungsbahn mit der zur Krafteinleitungsrichtung orthogonalen Verstellung des ersten Schlittens bei dessen Bewegung längs der ersten Bewegungsbahn derart kombiniert werden, daß der zweite Schlitten relativ zu dem Basisbereich insgesamt längs zwei voneinander unabhängigen Richtungen, nämlich parallel und orthogonal zur Krafteinleitungsrichtung, verstellt werden kann, ohne daß die Schlittenanordnung orthogonal zur Krafteinleitungsrichtung auskragende Bereiche aufweist, die sich unter der Einwirkung der Bearbeitungskraft verformen können.

Unter den zahlreichen denkbaren Anwendungsmöglichkeiten der erfindungsgemäßen Schlittenanordnung sind insbesondere Werkzeugmaschinen zu erwähnen, deren Maschinenbett einen im wesentlichen horizontalen Bereich aufweist, auf dem der Basisbereich der Schlittenanordnung eine vertikal aufragende Erhebung bildet. Insbesondere ist in diesem Fall der zweite Schlitten gegenüber dem Maschinenbett entsprechend der Funktion eines Kreuzschlittens horizontal und vertikal verstellbar. Bei diesen Werkzeugmaschinen kann es sich beispielsweise um Maschinen zur Herstellung oder Feinbearbeitung von Zahnrädern handeln.

Insbesondere kann das Werkzeug an dem zweiten Schlitten angeordnet sein. Falls es sich bei dem Werkzeug um ein Honrad handelt, ist auf dem zweiten Schlitten ein das Honrad aufnehmender und antreibender Werkzeugkopf angeordnet. Falles es sich bei dem Werkzeug um ein anderes Zahnbearbeitungswerkzeug handelt, wie z. B. ein Schabrad, ein Feinrad, eine Wälzschleifscheibe, einen Wälzfräser oder dgl., ist auf dem zweiten Schlitten ein dieses Werkzeug aufnehmender und antreibender Werkzeugkopf angeordnet.

Weiterhin kann vorgesehen sein, daß das Werkzeug um eine zu der zweiten Ebene orthogonale Achse verstellbar ist. Insbesondere kann diese Verstellung in Form einer gesteuerten Bewegung erfolgen, die von einem hierfür vorgesehenen Servoantrieb angetrieben ist. Im Falle des Honrads ist zu diesem Zweck der das Honrad aufnehmende Werkzeugkopf auf dem zweiten Schlitten um die orthogonale Achse verstellbar gelagert.

Im Rahmen der Erfindung ist auch vorgesehen, daß das Werkstück an einem längs einer zur zweiten Ebene parallelen dritten Bewegungsbahn verstellbaren dritten Schlitten angeordnet ist. Diese dritte Bewegungsbahn kann insbesondere auch orthogonal zur zweiten Bewegungsbahn verlaufen. Im Falle der Feinbearbeitung von Zahnradrohlingen durch das Honrad ist diese dritte Bewegungsbahn insbesondere orthogonal zu der Ebene, in der die beiden Verstellrichtungen des zweiten Schlittens liegen.

Als Führungen für die Schlitten können sowohl Gleitführungen als auch Linearwälzführungen dienen. Für den Antrieb der Schlitten längs ihrer jeweiligen Bewegungsbahn kommen beispielsweise Spindelantriebe oder Linearmotore in Betracht.

In der folgenden Beschreibung wird die Erfindung am Beispiel einer Zahnradhonmaschine unter Bezugnahme auf die Zeichnung näher erläutert. Hierin zeigen:
- Fig. 1: eine schematische Darstellung einer Zahnradhonmaschine in perspektivischer Ansicht,
- Fig. 2: eine schematische Schnittdarstellung gemäß der Linie I-I in Fig. 1.

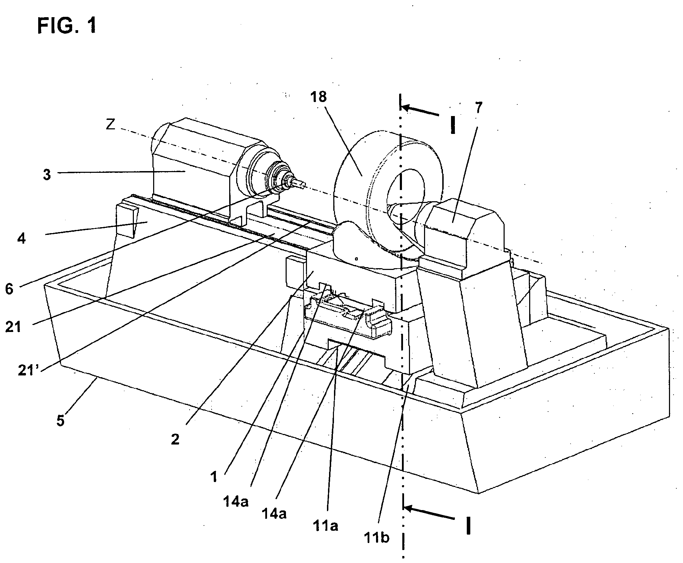

Die in Fig. 1 schematisch dargestellte Zahnradhonmaschine weist einen ersten Schlitten 1, einen zweiten Schlitten 2 und einen dritten Schlitten 3 auf, die gegenüber einem Maschinenbett 4 verstellbar sind, das auf Maschinenschuhen 5 abgestützt ist. Der dritte Schlitten 3 trägt eine drehend antreibbare Werkstückspindel 6, deren Drehachse die Werkstückachse bildet. Diese ist in Fig. 1 als strichpunktierte Linie eingezeichnet und mit dem Bezugssymbol Z bezeichnet. Weiter ist auf dem Maschinenbett 4 in Gegenüberstellung zu der Werkzeugspindel 6 ein mit der Werkstückachse Z fluchtender Reitstock 7 angeordnet.

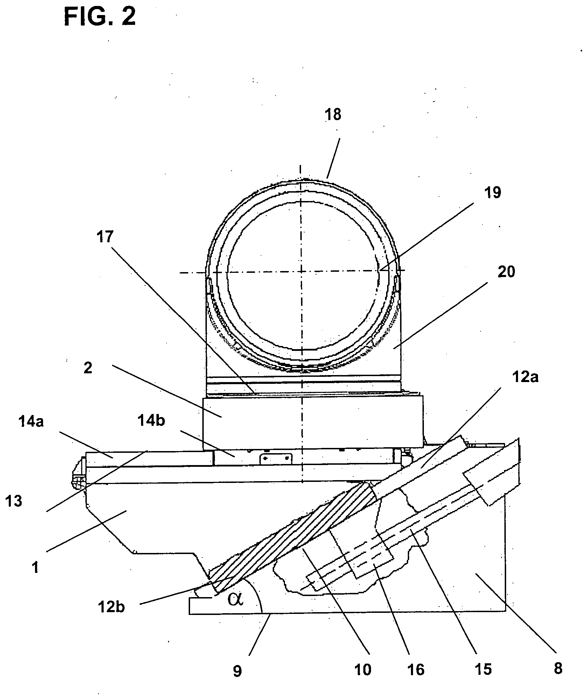

Fig. 2, in der eine zur Werkstückachse Z orthogonale, schematisierte Schnittansicht gemäß der Linie I-I in Fig. 1 dargestellt ist, läßt an einem horizontalen Bereich 9 des Maschinenbetts 4 einen Basisbereich 8 erkennen, der eine dem Maschinenbett 4 entgegengesetzte Oberseite 10 aufweist, welche gegenüber dem horizontalen Bereich 9 unter einem spitzen Winkel a geneigt ist. An dem Basisbereich 8 ist der erste Schlitten 1 längs seiner ersten Bewegungsbahn bewegbar geführt, die in einer unter diesem spitzen Winkel α geneigten und zu der Werkstückachse Z parallelen ersten Ebene liegt. Diese erste Bewegungsbahn verläuft in der Neigungsrichtung der ersten Ebene und damit orthogonal zur Werkstückachse Z. Für die Führung des ersten Schlittens 1 längs seiner ersten Bewegungsbahn ist ein Paar von Linearführungen, beispielsweise Gleitführungen oder Linearwälzführungen, vorgesehen, wobei je eine Führung des Paares längs einem an eine der beiden zur Werkstückachse Z orthogonalen Seitenkanten 11a, 11b angrenzenden Bereich des ersten Schlittens 1 angeordnet ist. Die in Fig. 2 dargestellte Schnittansicht, die durch diesen Bereich gelegt ist, zeigt schematisch ein an der gemäß der ersten Ebene geneigten Oberseite 10 des Basisbereichs 8 festgelegtes erstes Führungsteil 12a und ein daran gleitverschieblich geführtes zweites Führungsteil 12b, das an dem ersten Schlitten 1 festgelegt ist. Das erste Führungsteil 12a und das zweite Führungsteil 12b bilden dadurch gemeinsam eine der genannten Linearführungen.

Aus den Fig. 1 und 2 ist weiter ersichtlich, daß auf der der Oberseite 10 des Basisbereichs 8 entgegengesetzten Oberseite 13 des ersten Schlittens 1 erste Führungsteile 14a eines Paares von Linearführungen festgelegt sind, deren damit gleitverschieblich in Eingriff stehendes zweites Führungsteil 14b an der zur Oberseite 13 des ersten Schlittens 1 weisenden Unterseite des zweiten Schlittens 2 festgelegt ist. Durch diese Führungen 14a, 14b wird der zweite Schlitten 2 gemäß einer in einer zweiten, horizontalen Ebene liegenden zweiten Bewegungsbahn bewegbar geführt, wobei diese zweite Bewegungsbahn, ebenso wie die erste Bewegungsbahn, parallel zu einer zu der ersten und der zweiten Ebene orthogonalen Ebene verläuft.

Ein in Fig. 2 weggebrochener Bereich zeigt einen Schnitt, der durch eine zur Werkstückachse Z orthogonale Ebene gelegt ist, von der die beiden Führungen jedes Paares jeweils den gleichen Abstand haben. In diesem Schnitt ist ein Teil des Antriebs erkennbar, mit dem der erste Schlitten 1 längs seiner ersten Bewegungsbahn verstellbar ist. Dieser Antrieb weist eine von einem gesteuerten Elektromotor antreibbare Gewindespindel 15 auf, deren Längsachse parallel zur ersten Bewegungsbahn verläuft. Diese Gewindespindel durchsetzt eine zu ihr komplementäre Gewindebohrung, die in einem dafür ausgebildeten Bereich 16 des ersten Schlittens 1 vorgesehen ist. Durch einen drehenden Antrieb der in Bezug auf den Basisbereich 8 stationär festgelegten Gewindespindel 15 verschiebt sich der die Gewindebohrung aufweisende Bereich 16 längs deren Längsachse, wodurch der erste Schlitten 1 längs seiner ersten Bewegungsbahn verstellt wird. Statt des Gewindespindelantriebs könnte beispielsweise auch ein längs der ersten Bewegungsbahn wirksamer Linearmotor vorgesehen sein. Der Antrieb des zweiten Schlittens 2 längs seiner Führungen 14a, 14b erfolgt durch einen ähnlich ausgebildeten Spindelantrieb oder Linearmotor.

Durch geeignete Steuerung dieser Antriebe ist der zweite Schlitten 2 relativ zu dem Basisbereich 8 und dem Maschinenbett 4 sowohl horizontal als auch vertikal in einer zur Werkstückachse Z orthogonalen Ebene verstellbar, wobei der horizontale und der vertikale Verstellweg voneinander unabhängig oder auch abhängig eingestellt werden können.

Aus den Fig. 1 und 2 geht weiter hervor, daß auf der dem Basisbereich 8 abgewandten, horizontalen Oberseite 17 des zweiten Schlittens 2 ein im wesentlichen ringförmiger Werkzeugkopf 18 angeordnet ist, in dessen inneren Ringraum ein innenverzahntes Honwerkzeug 19 aufnehmbar ist. Dieser Werkzeugkopf 18 ist mit einem in Fig. 2 schematisch angedeuteten Drehantrieb 20 zur Drehung des Honrads 19 um eine durch dessen Zentrum verlaufende Werkzeugachse versehen. Außerdem ist der Werkzeugkopf 18 auf dem zweiten Schlitten 2 um eine zur zweiten Ebene orthogonale, also vertikale, Achse winkelverstellbar. Diese Winkelverstellung kann beispielsweise gesteuert durch einen Servoantrieb erfolgen.

Aus Fig. 1 geht noch hervor, daß der dritte Schlitten 3 an dem Maschinenbett 4 auf den Führungen des ersten und des zweiten Schlittens ähnlichen Führungen 21, 21' durch einen Spindelantrieb oder einen Linearmotor längs einer dritten Bewegungsbahn verstellbar ist, die parallel zu der Werkstückachse Z verläuft. Gleichermaßen ist auch der Reitstock 7 auf dem Maschinenbett 4 parallel zur Werkstückachse Z verstellbar.

Für die Bearbeitung eines auf der Werkstückspindel 6 aufgespannten Werkstücks, nämlich eines zu honenden Zahnradrohlings, wird der dritte Schlitten 3 längs seiner dritten Bewegungsbahn in Richtung auf den Werkzeugkopf 18 verstellt, so daß das Werkstück mit dem Honwerkzeug 19 in Bearbeitungseingriff gelangen kann. Außerdem wird der Reitstock 7 gegen das in seiner Bearbeitungsstellung befindliche Werkstück gefahren. Die durch den Bearbeitungseingriff zwischen dem Werkzeug und dem Werkstück verursachte Bearbeitungskraft wird im wesentlichen vertikal in den zweiten Schlitten 2 eingeleitet und im wesentlichen parallel zu dieser Krafteinleitungsrichtung auf das die Bearbeitungskraft aufnehmende Maschinenbett 4 übertragen. Die aus dem zweiten Schlitten, dem ersten Schlitten und dem Basisbereich 8 bestehende Kraftübertragungskette wird dabei im wesentlichen wie eine vertikale Säule beansprucht, die in ihrer Längsrichtung druckbelastet wird. Deshalb treten keine nennenswerten Biegemomente auf, welche die Steifigkeit der Anordnung beeinträchtigen.

### Verzeichnis der Bezugszeichen

- 1: erster Schlitten
- 2: zweiter Schlitten
- 3: dritter Schlitten
- 4: Maschinenbett
- 5: Maschinengestell
- 6: Werkstückspindel
- Z: Werkstückachse
- 7: Reitstock
- 8: Basisbereich
- 9: horizontaler Bereich
- 10: Oberseite des Basisbereichs
- α: spitzer Winkel
- 11a, 11b: Seitenkante
- 12a: erstes Führungsteil
- 12b: zweites Führungsteil
- 13: Oberseite des ersten Schlittens
- 14a: erstes Führungsteil
- 14b: zweites Führungsteil
- 15: Gewindespindel
- 16: Bereich des ersten Schlittens
- 17: Oberseite des zweiten Schlittens
- 18: Werkzeug kopf
- 19: Honwerkzeug
- 20: Drehantrieb
- 21, 21': Führungen

## Patentansprüche

1. Werkzeugmaschine zur Bearbeitung eines Werkstücks mit einem Werkzeug, bei der das Werkstück und das Werkzeug gemäß einem vorgegebenen Bearbeitungsablauf relativ zueinander bewegt werden und eine durch den Bearbeitungseingriff zwischen dem Werkzeug und dem Werkstück bedingte Bearbeitungskraft, in einen zweiten Schlitten (2) einer Schlittenanordnung der Werkzeugmaschine in einer vertikalen Krafteinleitungsrichtung eingeleitet und von einem Basisbereich der Schlittenanordnung aufgenommen wird,
wobei der zweite Schlitten (2) an einem ersten Schlitten (1) der Schlittenanordnung gemäß einer in einer zweiten Ebene liegenden zweiten Bewegungsbahn bewegbar geführt ist, der erste Schlitten (1) an dem Basisbereich (8) gemäß einer in einer ersten Ebene liegenden ersten Bewegungsbahn bewegbar geführt ist, die erste Ebene gegenüber der zweiten Ebene geneigt ist und die erste Bewegungsbahn in deren Neigungsrichtung verläuft,
und wobei die Relativ-Zueinanderbewegung durch Bewegungen der beiden Schlitten erfolgt und ein der Bearbeitungskraft entsprechender Kraftfluss in dem zweiten Schlitten (2), durch den ersten Schlitten (1) hindurch zu dem Basisbereich (8) und in dem Basisbereich (8) im Wesentlichen parallel zur vertikalen Krafteinleitungsrichtung verläuft,
**dadurch gekennzeichnet, dass** die zweite Ebene als zur Krafteinleitungsrichtung orthogonale horizontal verlaufende Ebene gebildet ist.

2. Werkzeugmaschine nach Anspruch 1, **dadurch gekennzeichnet, dass** die zweite Bewegungsbahn in einer zur ersten und zweiten Ebene orthogonalen Ebene verläuft.

3. Werkzeugmaschine nach einem der Ansprüche 1 bis 2, **dadurch gekennzeichnet, dass** der Basisbereich (8) an einem im Wesentlichen horizontalen Bereich (9) ihres Maschinenbetts (4) ausgebildet ist.

4. Werkzeugmaschine nach Anspruch 3, **dadurch gekennzeichnet, dass** die dem Maschinenbett entgegengesetzte Oberseite (10) des Basisbereichs im Wesentlichen parallel zur ersten Ebene verläuft.

5. Werkzeugmaschine nach einem der Ansprüche 1 bis 4, **dadurch gekennzeichnet, dass** die Führungen (12a, 12b; 14a, 14b) der Schlitten Linearwälzführungen sind.

6. Werkzeugmaschine nach einem der Ansprüche 1 bis 4, **dadurch gekennzeichnet, dass** die Führungen 12a, 12b; 14a, 14b) der Schlitten Gleitführungen sind.

7. Werkzeugmaschine nach einem der Ansprüche 1 bis 6, **dadurch gekennzeichnet, dass** die Schlitten (1, 2) von längs ihrer Bewegungsbahn wirkenden Spindelantrieben angetrieben sind.

8. Werkzeugmaschine nach einem der Ansprüche 1 bis 6, **dadurch gekennzeichnet, dass** die Schlitten (1, 2) von längs ihrer Bewegungsbahn wirkenden Linearmotoren angetrieben sind.

9. Werkzeugmaschine nach einem der Ansprüche 1 bis 8, **dadurch gekennzeichnet, dass** das Werkzeug (19) an dem zweiten Schlitten (2) angeordnet ist.

10. Werkzeugmaschine nach Anspruch 9, **dadurch gekennzeichnet, dass** das Werkzeug (19) um eine zu der zweiten Ebene orthogonale Achse verstellbar ist.

11. Werkzeugmaschine nach Anspruch 9 oder 10, **dadurch gekennzeichnet, dass** das Werkzeug (19) ein Zahnradfeinbearbeitungswerkzeug, insbesondere ein Honrad, Schabrad, Feinrad, eine Schleifschnecke, Profilschleifscheibe, Wälzschleifscheibe oder dergleichen ist.

12. Werkzeugmaschine nach einem der Ansprüche 1 bis 11, **dadurch gekennzeichnet, dass** das Werkstück an einem längs einer zur zweiten Ebene parallelen dritten Bewegungsbahn verstellbaren dritten Schlitten (3) angeordnet ist.

13. Werkzeugmaschine nach Anspruch 12, **dadurch gekennzeichnet, dass** die dritte Bewegungsbahn orthogonal zur zweiten Bewegungsbahn verläuft.

14. Werkzeugmaschine nach Anspruch 13, **dadurch gekennzeichnet, dass** das Werkstück ein Zahnradrohling ist.

## Claims

1. A machine tool for machining a workpiece with a tool, wherein the workpiece and the tool are moved relative to one another according to a pre-defined machining sequence and a machining force caused by the machining engagement between the tool and the workpiece is introduced into a second carriage (2) of a carriage arrangement of the machine tool in a vertical direction of introducing force and is absorbed by a base area of the carriage arrangement,
the second carriage (2) being guided moveably on a first carriage (1) of the carriage arrangement according to a second path of movement lying in a second plane, the first carriage (1) being guided moveably on the base area (8) according to a first path of movement lying in a first plane, the first plane being inclined with respect to the second plane, and the first path of movement running in its direction of incline,
and the movement relative to one another taking place by movements of the two carriages, and a flow of force corresponding to the machining force in the second carriage (2) running through the first carriage (1) to the base area (8) and substantially parallel to the vertical direction of introducing force in the base area (8),
**characterised in that** the second plane is formed as a horizontally running plane that is orthogonal to the direction of introducing force.

2. The machine tool according to Claim 1, **characterised in that** the second path of movement runs in a plane orthogonal to the first and the second plane.

3. The machine tool according to either of Claims 1 to 2, **characterised in that** the base area (8) is formed on a substantially horizontal area (9) of its machine bed (4).

4. The machine tool according to Claim 3, **characterised in that** the top side (10) of the base area opposite the machine bed runs substantially parallel to the first plane.

5. The machine tool according to any of Claims 1 to 4, **characterised in that** the guides (12a, 12b; 14a, 14b) of the carriages are linear roller guides.

6. The machine tool according to any of Claims 1 to 4, **characterised in that** the guides (12a, 12b; 14a, 14b) of the carriages are sliding guides.

7. The machine tool according to any of Claims 1 to 6, **characterised in that** the carriages (1, 2) are driven by spindle drives acting along their path of movement.

8. The machine tool according to any of Claims 1 to 6, **characterised in that** the carriages (1, 2) are driven by linear motors acting along their path of movement.

9. The machine tool according to any of Claims 1 to 8, **characterised in that** the tool (19) is disposed on the second carriage (2).

10. The machine tool according to Claim 9, **characterised in that** the tool (19) can be adjusted about an axis orthogonal to the second plane.

11. The machine tool according to Claim 9 or 10, **characterised in that** the tool (19) is a gearwheel precision machining tool, in particular a honing wheel, a shaving cutter, a finishing cutter, a worm grinding disc, a profiled grinding disc, a hob grinding disc or the like.

12. The machine tool according to any of Claims 1 to 11, **characterised in that** the workpiece is disposed on a third carriage (3) that can be adjusted along a third path of movement parallel to the second plane.

13. The machine tool according to Claim 12, **characterised in that** the third path of movement runs orthogonally to the second path of movement.

14. The machine tool according to Claim 13, **characterised in that** the workpiece is a gear wheel blank.

## Revendications

1. Machine-outil destinée à l'usinage d'une pièce à usiner à l'aide d'un outil, dans laquelle la pièce à usiner et l'outil subissent un déplacement relatif l'un par rapport à l'autre selon un processus d'usinage prédéfini et une force d'usinage due à l'action de l'outil sur la pièce à usiner est transmise à un deuxième chariot (2) d'un agencement de chariots de la machine-outil dans un sens vertical de transmission de force et est absorbée par une zone de base de l'agencement de chariots,
dans laquelle le deuxième chariot (2) est guidé mobile sur un premier chariot (1) de l'agencement de chariots selon une deuxième voie de déplacement située dans un deuxième plan, le premier chariot (1) étant guidé mobile sur la zone de base (8) selon une première voie de déplacement située dans un premier plan, le premier plan étant incliné par rapport au deuxième plan, et la première voie de déplacement s'étendant dans le sens d'inclinaison de celui-ci,
et dans laquelle le déplacement relatif l'un par rapport à l'autre se produit du fait des déplacements des deux chariots, et un flux de force correspondant à la force d'usinage passe dans le deuxième chariot (2) en traversant le premier chariot (1) en direction de la zone de base (8) et dans la zone de base (8) sensiblement parallèlement au sens vertical de transmission de force,
**caractérisée en ce que** le deuxième plan consiste en un plan horizontal qui est orthogonal au sens de transmission de force.

2. Machine-outil selon la revendication 1, **caractérisée en ce que** la deuxième voie de déplacement est orientée dans un plan orthogonal au premier et au deuxième plan.

3. Machine-outil selon l'une des revendications 1 et 2, **caractérisée en ce que** la zone de base (8) est conçue dans une zone (9) essentiellement horizontale de son banc de machine (4).

4. Machine-outil selon la revendication 3, **caractérisée en ce que** le côté supérieur (10) de la zone de base opposé au banc de machine est essentiellement parallèle au premier plan.

5. Machine-outil selon l'une des revendications 1 à 4, **caractérisée en ce que** les systèmes de guidage (12a, 12b ; 14a, 14b) des chariots sont des guidages à roulements linéaires.

6. Machine-outil selon l'une des revendications 1 à 4, **caractérisée en ce que** les systèmes de guidage (12a, 12b ; 14a, 14b) des chariots sont des guidages à glissement.

7. Machine-outil selon l'une des revendications 1 à 6, **caractérisée en ce que** les chariots (1, 2) sont entraînés par des entraînements de broche agissant le long de leur voie de déplacement.

8. Machine-outil selon l'une des revendications 1 à 6, **caractérisée en ce que** les chariots (1, 2) sont entraînés par des moteurs linéaires agissant le long de leur voie de déplacement.

9. Machine-outil selon l'une des revendications 1 à 8, **caractérisée en ce que** l'outil (19) est disposé sur le deuxième chariot (2).

10. Machine-outil selon la revendication 9, **caractérisée en ce que** l'outil (19) est réglable autour d'un axe orthogonal au deuxième plan.

11. Machine-outil selon la revendication 9 ou 10, **caractérisée en ce que** l'outil (19) est un outil de finition de roues dentées, notamment une roue de pierrage, roue de rasage, roue de finissage, une meule d'ébarbage, une meule de dressage des profils, une meule de rectification par génération ou similaire.

12. Machine-outil selon l'une des revendications 1 à 11, **caractérisée en ce que** la pièce à usiner est disposée sur un troisième chariot (3) déplaçable le long d'une troisième voie de déplacement parallèle au deuxième plan.

13. Machine-outil selon la revendication 12, **caractérisée en ce que** la troisième voie de déplacement est orthogonale à la deuxième voie de déplacement.

14. Machine-outil selon la revendication 13, **caractérisée en ce que** la pièce à usiner est une ébauche de roue dentée.
